# EUROPEAN PATENT SPECIFICATION

(11) **EP 2 905 191 B1**
(45) Date of publication and mention of the grant of the patent: **17.07.2019**
(21) Application number: 15153171.2
(22) Date of filing: 30.01.2015
(51) Int. Cl.: B60T 17/02, F04B 39/06, F04B 39/12, F04B 39/10

(54) **Vehicle air compressor apparatus for a heavy vehicle air braking system**
Fahrzeugluftkompressorvorrichtung für ein Druckluftbremssystem für Schwerfahrzeuge
Appareil de compresseur d'air de véhicule pour un système de freinage pneumatique d'un véhicule lourd

(30) Priority: 06.02.2014 US 201414174434
(43) Date of publication of application: 12.08.2015
(73) Proprietor: Bendix Commercial Vehicle Systems LLC, Elyria, Ohio 44035 (US)
(72) Inventor: Huffman, Justin R., Eastlake, OH Ohio 44095 (US); Cremean, Michael A., Elyria, OH Ohio 44035 (US); Burkhardt, Hans, Grafton, OH Ohio 44044 (US)
(74) Representative: Maiwald Patent- und Rechtsanwaltsgesellschaft mbH

(56) References cited:
- WO-A2-2006/057667
- AT-A4- 512 923
- DE-A1- 2 410 705
- DE-A1- 2 422 448
- DE-A1- 19 535 079
- DE-A1-102008 018 467
- DE-A1-102010 024 346
- FR-A1- 2 449 211
- GB-A- 1 357 078
- JP-A- H11 218 079
- US-A- 6 062 825

## Description

### Background

The present application relates to heavy vehicle braking systems, and is particularly directed to a vehicle air compressor apparatus for a heavy vehicle air braking system, such as a truck air braking system.

An example of such a system is known from the EP 1 028 254 A1.

FR2449211A1 describes a cylinder head for a compressor having a pre-compression stage and a high pressure stage has a pressure chamber for receiving pressurized fluid from the pre-compression stage and delivering it to the high pressure stage and, to cool down the pressurized fluid before it enters the high pressure stage, a coolant space surrounds the pressure chamber. Advantageously, parallel paths are provided for the flow of coolant through the coolant space.

DE102008018467A1 describes that a valve plate includes a cooling medium duct for a compressor used for generating compressed air. From the perspective of a piston chamber of the compressor, at least part of the cooling medium duct extends between the piston chamber and an air discharge valve that is arranged in the valve plate. A method for cooling compressed air in a valve plate of a compressor is also provided.

AT512923A4 relates to a cylinder head for a two-stage reciprocating piston compressor, comprising an intercooler that is designed as a cooled overflow channel between the pressure side of the first stage and the suction side of the second stage, wherein the overflow channel has a substantially slot-like cross-section, and the overflow channel is in addition divided by at least one indirectly cooled center rib so that therefrom at least two overflow channel portions and are created, wherein the cylinder hea has a cylinder head upper part and a cylinder head lower part, the cross-section of the indirectly cooled center rib is divided in its longitudinal extent thereby forming a passage gap between the overflow channels and that run on both sides, and one portion of the center rib; is formed from the cylinder head upper part and the other portion of the center rib is formed from the cylinder head lower part.

JPH11218079A describes that an air compressor comprises a piston reciprocated by an engine: a cylinder chamber containing the piston in a reciprocating state a cylinder head having an intake passage and discharge passage with a cylinder chamber positioned adjacently with the cylinder chamber and therebetween an intake valve to open and close the intake passage; and a discharge valve to open and close the discharge passage. An air guide plate to guide air, discharged through a discharge port, to the inner wall surface of the discharge passage is positioned downstream from the discharge valve of the discharge passage and spans in a manner to cross the discharge direction of the air. The constitution high-efficiently heat-exchanges high temperature air with a cylinder head and sufficiently cools the air since when air discharged in the discharge passage from the discharge valve flows through the discharge passage, air is guided to effect effective contact with an inner wall surface through an air guide plate.

A truck air braking system includes a vehicle air compressor which builds air pressure for the air braking system. The compressor is typically cooled by an engine coolant system and lubricated by an engine oil supply. A governor controls system air pressure between a preset maximum and minimum pressure level by monitoring the air pressure in a supply reservoir. When the supply reservoir air pressure becomes greater than that of a preset "cut-out" setting of the governor, the governor controls the compressor to stop the compressor from building air and also causes an air dryer downstream from the compressor to go into purge mode. As the supply reservoir air pressure drops to a preset "cut-in" setting of the governor, the governor returns the compressor back to building air and the air dryer to air drying mode.

Air discharged from the compressor gains a significant amount of heat during the compression process. A discharge line interconnects the compressor and the air dryer to deliver compressed air from the compressor to the downstream air dryer. The compressed air cools as the air moves from the compressor through the discharge line to the air dryer. A larger diameter discharge line helps to cool the compressed air more as the air moves from the compressor to the air dryer. Also, a longer length discharge line helps to cool the compressed air more as the air moves from the compressor to the air dryer. It would be desirable to provide a vehicle air compressor apparatus which provides even more cooling of air discharged from the compressor.

### Summary

In a first aspect, there is provided a vehicle air compressor apparatus for a heavy vehicle air braking system, as defined in appended claim 1. In a second aspect, there is provided a vehicle air compressor apparatus for a heavy vehicle air braking system, as defined in appended claim 11. In a third aspect, there is provided a method of retrofitting the vehicle air compressor apparatus of the second aspect to a vehicle air compressor having a legacy crankcase assembly and a legacy cylinder head assembly disposed on the legacy crankcase assembly, as defined in appended claim 12.

In accordance with one embodiment, a vehicle air compressor apparatus is provided for a heavy vehicle air braking system. The vehicle air compressor apparatus comprises a compressor crankcase assembly, and a compressor cylinder head assembly disposed on the crankcase assembly. The cylinder head assembly includes (i) an air inlet port through which air can be received for compression within the crankcase and cylinder head assemblies, (ii) a discharge port through which compressed air can be delivered from the cylinder head assembly, (iii) a first intermediate port through which compressed air can pass, and (iv) a second intermediate port through which cooled compressed air can pass. The vehicle air compressor apparatus further comprises a discharge air cooling jumper connected externally of the cylinder head assembly between the first and second intermediate ports. The discharge air cooling jumper is arranged to cool compressed air passing from the first intermediate port through a discharge air path of the jumper to the second intermediate port and thereby to provide cooler compressed air to be delivered from the cylinder head assembly through the discharge port.

In accordance with another embodiment, a vehicle air compressor apparatus is provided for a heavy vehicle braking system. The vehicle air compressor apparatus comprises a compressor crankcase assembly, and a compressor cylinder head assembly disposed on the crankcase assembly. The cylinder head assembly co-operates with the crankcase assembly to generate compressed air. The cylinder head assembly includes (i) an air inlet port through which air can be received for compression within the crankcase and cylinder head assemblies, and (ii) a discharge port through which compressed air can be delivered from the cylinder head assembly. The vehicle air compressor apparatus further comprises cooling means connected externally of the crankcase and cylinder head assemblies. The cooling means is provided for cooling compressed air before the compressed air is delivered from the cylinder head assembly through the discharge port to deliver cooler compressed air through the discharge port.

In accordance with yet another embodiment, a vehicle air compressor apparatus for a heavy vehicle braking system. The vehicle air compressor apparatus comprises a compressor cylinder head assembly connectable to a crankcase assembly. The cylinder head assembly includes (i) an air inlet port through which air can be received for compression within the crankcase and cylinder head assemblies, (ii) a discharge port through which compressed air can be delivered from the cylinder head assembly, (iii) a first intermediate port through which compressed air can pass, and (iv) a second intermediate port through which cooled compressed air can pass. The vehicle air compressor apparatus further comprises a discharge air cooling jumper connected externally of the cylinder head assembly between the first and second intermediate ports. The discharge air cooling jumper is arranged to cool compressed air passing from the first intermediate port through a discharge air path of the jumper to the second intermediate port and thereby to provide cooler compressed air to be delivered from the cylinder head assembly through the discharge port.

### Brief Description of the Drawings

Fig. 1 is a schematic diagram of a vehicle air brake charging system including a vehicle air compressor apparatus constructed in accordance with an embodiment.
Fig. 2A is a perspective view of a known vehicle air compressor for use in a heavy vehicle air braking system.
Fig. 2B is a top view, looking approximately in the direction of arrow "2B" shown in Fig. 2A, of the known vehicle air compressor of Fig. 2A.
Fig. 3A is a perspective view of the vehicle air compressor apparatus shown in Fig. 1.
Fig. 3B is a top view, looking approximately in the direction of arrow "3B" shown in Fig. 3A, and showing certain parts removed.
Fig. 3C is another perspective view, looking approximately in the direction of arrow "3C" shown in Fig. 3A, of the vehicle air compressor apparatus of Fig. 3A.
Fig. 3D is a side view, looking approximately in the direction of arrow "3D" shown in Fig. 3A, of the vehicle air compressor apparatus of Fig. 3A.
Fig. 4A is a top perspective view of a discharge air cooling jumper shown in the vehicle air compressor apparatus of Fig. 3A.
Fig. 4B is a bottom perspective view, looking approximately in the direction of arrow "4B" shown in Fig. 4A, of the discharge air cooling jumper of Fig. 4A.
Fig. 4C is a sectional view, taken approximately along line 4C-4C shown in Fig. 4A, and showing a discharge air path in the discharge air cooling jumper.
Figs. 5A and 5B are views similar to Figs. 4A and 4B, respectively, and showing another embodiment.
Figs. 6A and 6B are views similar to Figs. 4A and 4B, respectively, and showing another embodiment.
Figs. 7A and 7B are views similar to Figs. 4A and 4B, respectively, and showing another embodiment.
Figs. 8A and 8B are views similar to Figs. 4A and 4B, respectively, and showing another embodiment.

### Detailed Description

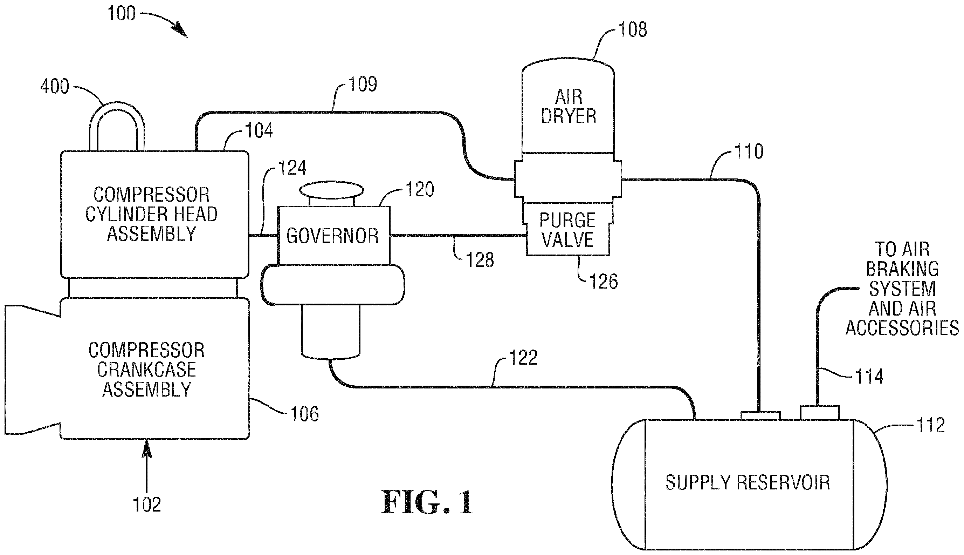

Referring to Fig. 1, apparatus 100 is provided for use in an air brake charging system of a heavy vehicle such as a truck. Apparatus 100 is constructed in accordance with one embodiment.

Air compressor 102 includes compressor cylinder head assembly 104 disposed on compressor crankcase assembly 106. Components of crankcase assembly 106 and components of cylinder head assembly 104 co-operate together to generate compressed air.

Compressor 102 further includes discharge air cooling jumper 400 which is disposed on cylinder head assembly 104. Structure and operation of discharge air cooling jumper 400 will be described later.

First discharge line 109 is pneumatically connected between cylinder head assembly 104 and air dryer 108. Second discharge line 110 is pneumatically connected between air dryer 108 and supply reservoir 112. Air supply line 114 is pneumatically connected between supply reservoir 112 and air braking system and air accessories (not shown) of the vehicle.

Governor 120 controls system air pressure between a preset maximum and minimum pressure level by monitoring the air pressure in pneumatic control line 122 from supply reservoir 112. When air pressure in supply reservoir 112 becomes greater than that of a preset "cut-out" setting of governor 120, the governor controls compressor 102 on pneumatic control line 124 to stop compressor from building air. Governor 120 also controls purge valve 126 on pneumatic control line 128 to purge air from air dryer 108. When air pressure in supply reservoir 112 drops to a preset "cut-in" setting of governor 120, the governor returns compressor 102 back to building air and air dryer 108 to air drying mode.

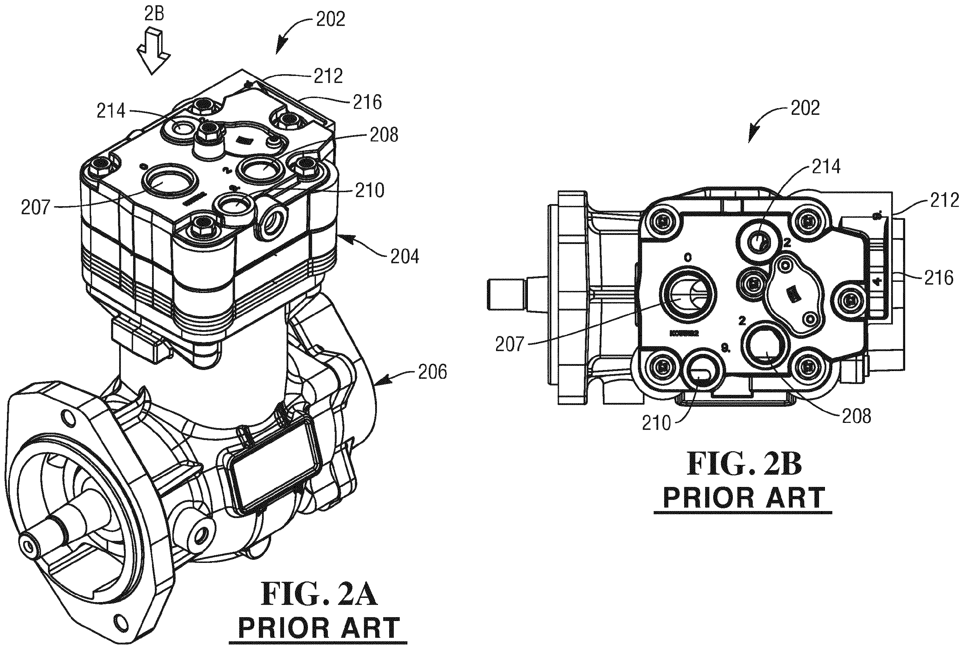

Compressor 102 may be based on design of known "standard" Bendix BA-921® Compressor commercially available from Bendix Commercial Vehicle Systems LLC located in Elyria, Ohio. The known BA-921® compressor is shown in Figs. 2A and 2B, and is designated with reference numeral "202" in Figs. 2A and 2B. Fig. 2B is a top view, looking approximately in the direction of arrow "2B" shown in Fig. 2A.

Compressor 202 includes compressor cylinder head assembly 204 disposed on compressor crankcase assembly 206 in known manner. Cylinder head assembly 204 includes air inlet port 207 through which air can be received for compression within the crankcase assembly 206 and cylinder head assembly 204. Cylinder head assembly 204 includes discharge port 208 through which compressed air can be delivered from the cylinder head assembly 204. A pair of coolant ports 210, 212 is provided through which coolant can flow to cool cylinder head assembly 204 as compressed air is being generated. Cylinder head assembly 204 further includes safety valve port 214, and governor port 216 which is connectable through a pneumatic control line to a governor. Known compressor 202 shown in Figs. 2A and 2B can be modified to provide a vehicle air compressor apparatus 100, such as shown in Fig. 1.

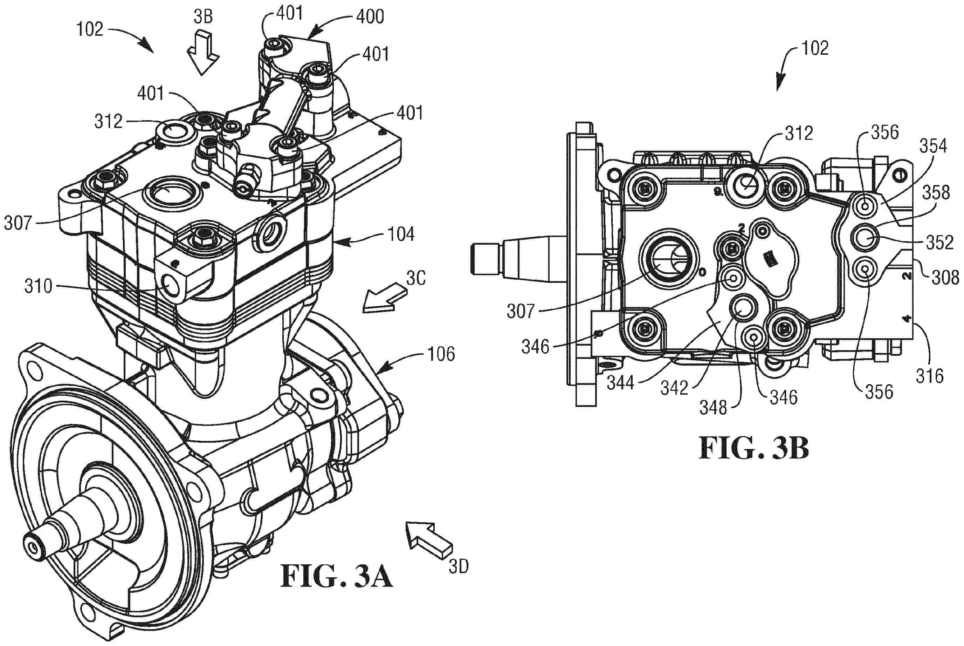

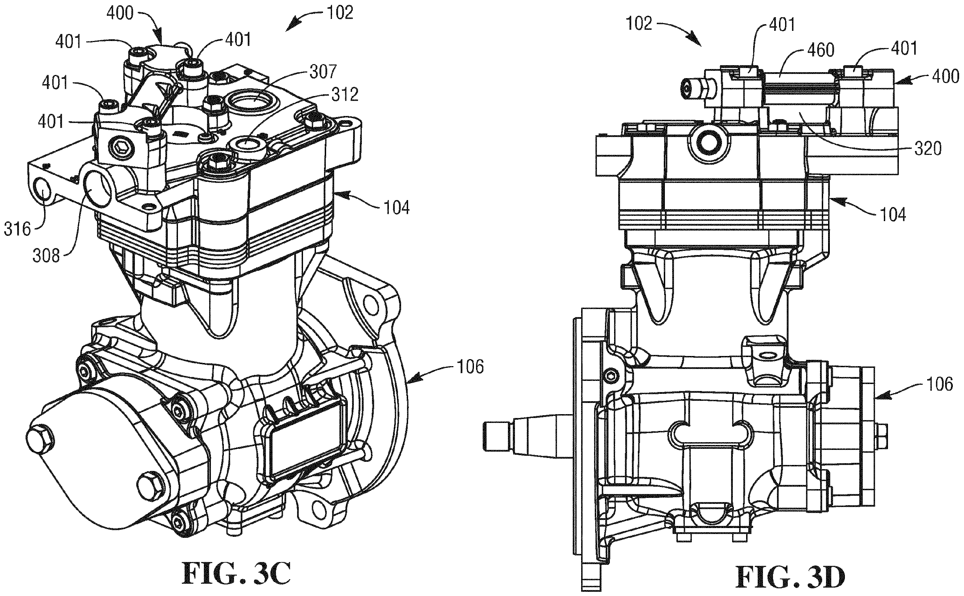

Referring to Figs. 3A, 3B, 3C, and 3D, compressor 102 of Fig. 1 is illustrated in detail. Fig. 3A is a perspective view of compressor 102 shown in Fig. 1. Fig. 3B is a top view, looking approximately in the direction of arrow "3B" shown in Fig. 3A, and showing certain parts removed so that parts of cylinder head assembly 104 (Fig. 1) can be seen. Fig. 3C is a perspective view, looking approximately in the direction of arrow "3C" shown in Fig. 3A. Fig. 3D is a side view, looking approximately in the direction of arrow "3D" shown in Fig. 3A. As already mentioned above, compressor 102 includes cylinder head assembly 104 disposed on crankcase assembly 106.

While compressor 102 including cylinder head assembly 104 and crankcase 106, as shown in Figs. 3A, 3B, 3C, and 3D, can be manufactured as a new compressor, it is conceivable that the known BA-921® compressor shown in Figs. 2A and 2B may be modified (i.e., retrofitted) to provide the structure and operation of compressor 102 shown in Figs. 3A, 3B, 3C, and 3D. Such a modification is briefly described in the next couple of paragraphs hereinbelow.

During modification of known compressor 202 of Figs. 2A and 2B, "legacy" cylinder head assembly 204 is removed from "legacy" crankcase assembly 206 and replaced with cylinder head assembly 104 of Figs. 3A 3B, 3C, and 3D. After cylinder head assembly 104 is connected to legacy crankcase assembly 206, discharge air cooling jumper 400 is connected to cylinder head assembly 104. It is also conceivable that discharge air cooling jumper 400 may be first connected to cylinder head assembly 104, and then the combined unit of the cylinder head assembly 104 and the discharge air cooling jumper 400 be connected to legacy crankcase assembly 206.

It should be apparent that crankcase assembly 106 shown in Fig. 1 has the same structure as legacy crankcase assembly 206 shown in Fig 2A. It should also be apparent that cylinder head assembly 104 shown in Figs. 3A, 3B, 3C, and 3D has a structure which is different from the structure of legacy cylinder head assembly 204 shown in Figs. 2A and 2B. Accordingly, compressor 102 (shown in Figs. 3A, 3B, 3C, and 3D) may be provided by taking legacy compressor 202 (shown in Figs. 2A and 2B) and replacing legacy cylinder head assembly 204 with "new" cylinder head assembly 104 and discharge air cooling jumper 400 to provide "new" compressor 102.

Referring again to Figs. 3A, 3B, 3C, and 3D, cylinder head assembly 104 includes air inlet port 307 through which air can be received for compression within crankcase assembly 106 and cylinder head assembly 104. Cylinder head assembly 104 also includes discharge port 308 (Fig. 3C) through which compressed air can be delivered from the cylinder head assembly 104. A pair of coolant ports 310, 312 is provided through which coolant can flow to cool cylinder head assembly 104 as compressed air is being generated. Cylinder head assembly 104 further includes governor port 316 (Fig. 3C) which is connectable through pneumatic control line 124 (Fig. 1) to governor 120.

As shown only in Fig. 3B, cylinder head assembly 104 further includes first intermediate port 342 through which compressed air can pass, and second intermediate port 352 through which compressed air can pass. First intermediate port 342 is connectable in fluid communication to air inlet port 307 through a number of air passages which are internal to cylinder head assembly 104. Second intermediate port 352 is connectable in fluid communication to discharge port 308 through a number of air passages which are internal to cylinder head assembly 104.

First cylinder head bearing surface 344 is located in the vicinity of first intermediate port 342, and first O-ring 348 is on first cylinder head bearing surface 344. Threaded bolt bores 346 are disposed on opposite sides of first intermediate port 342. Similarly, second cylinder head bearing surface 354 is located in the vicinity of second intermediate port 352, and second O-ring 358 is on second cylinder head bearing surface 354. Threaded bolt bores 356 are disposed on opposite sides of second intermediate port 352.

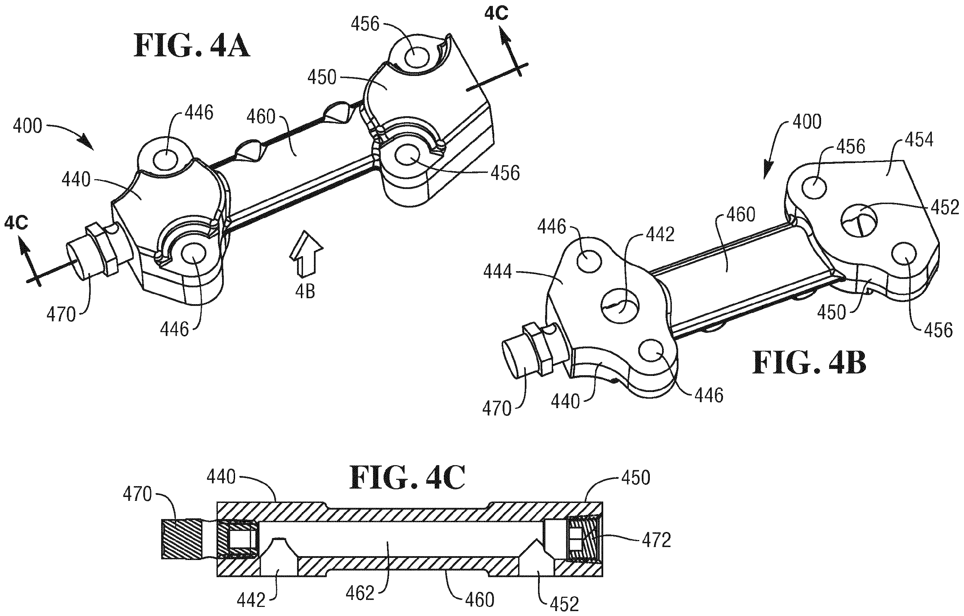

Referring to Figs. 4A, 4B, and 4C, discharge air cooling jumper 400 is illustrated. Fig. 4B is a bottom perspective view, looking approximately in the direction of arrow "4B" shown in Fig. 4A. Fig. 4C is a sectional view, taken approximately along line 4C-4C shown in Fig. 4A, and showing discharge air path 462 in discharge air cooling jumper 400. Discharge air cooling jumper 400 is connectable between first and second intermediate ports 342, 352 of cylinder head assembly 104 to cool compressed air passing therethrough, as will be described in detail herein. Discharge air cooling jumper 400 may comprise metal material which is the same or similar to material of cylinder head assembly 104. For example, material of discharge air cooling jumper 400 may comprise aluminum. Material of discharge air cooling jumper 400 may comprise material other than metal material.

Discharge air cooling jumper 400 includes first end portion 440, second end portion 450, and central portion 460 interconnecting first and second end portions 440, 450. First end portion 440 includes first port 442 located at one end of discharge air path 462. Second end portion 450 includes second port 452 located at opposite end of discharge air path 462. Accordingly, discharge air path 462 extends between first and second end ports 442, 452 to define a substantially U-shaped air path through jumper 400.

Safety valve 470 is disposed at first end portion 440 of jumper 400. Machining hole plug 472 is disposed at second end portion 450 of jumper 400.

First jumper bearing surface 444 is disposed at first end portion 440 of jumper 400, and is located in vicinity of first port 442. Bolt holes 446 are disposed on opposite sides of first port 442. Similarly, second jumper bearing surface 454 is disposed at second end portion 450, and is located in vicinity of second port 452. Bolt holes 456 are disposed on opposite sides of second port 452.

Discharge air cooling jumper 400 shown in Figs 4A, 4B, and 4C is connected to cylinder head assembly 104 using bolts 401 (Figs 3A and 3C). Bolts 401 pass through bolt holes 446, 456 of jumper 400, and are screwed into threaded bores 346, 356 (Fig. 3B) in cylinder head assembly 104. O-ring 348 is sandwiched between first cylinder head bearing surface 344 and first jumper bearing surface 444 to provide an airtight seal therebetween. Similarly, O-ring 358 is sandwiched between second cylinder head bearing surface 354 and second jumper bearing surface 454 to provide an airtight seal therebetween. Also, when jumper 400 is connected to cylinder head assembly 104, an air gap 320 (best shown in Fig. 3D) is defined between central portion 460 of jumper 400 and cylinder head assembly 104. Thus, central portion 460 of jumper 400 is spaced apart from cylinder head assembly 104.

The position of jumper 400 is located outside of cylinder head assembly 104, and is exposed to ambient air. As such, jumper 400 experiences temperatures less than temperatures experienced by cylinder head assembly 104. The result is that compressed air passing through jumper 400 is cooled.

It should be apparent that head-cooled discharge air exits cylinder head assembly 104 and enters into discharge air path 462 of discharge air cooling jumper 400. Since jumper 400 is located outside of cylinder head assembly 104 and is exposed to ambient air, the discharge air is cooled before it enters back into cylinder head assembly 104 to be delivered to discharge port 308 (Fig. 3C).

It should further be apparent that a new compressor can be manufactured, or a legacy compressor can be modified to provide the additional cooling of air discharged from the compressor as described hereinabove.

It should also be apparent that port locations of a cylinder head assembly of a commercially available vehicle air compressor (i.e., the standard Bendix BA-921® Compressor in the above-described example) have been modified without affecting the pneumatic function of the compressor. More specifically, port locations of the BA-921® have been altered to facilitate installation of discharge air cooling jumper 400 to provide extra cooling of air discharged from the compressor. This is achieved without having to modify the compressor crankcase assembly.

A number of advantages result by providing either a newly-manufactured compressor or a modified commercially available vehicle air compressor in accordance with the above-described description. One advantage is that the overall temperature of air discharged from the discharge port of the compressor is reduced. Engineering tests have indicated a 15% to 50% reduction in the temperature of the air at the discharge port when comparing a standard BA-921® compressor without a discharge air cooling jumper to the new compressor with the discharge air cooling jumper. This temperature reduction decreases the potential of carbon buildup at the discharge port.

Another advantage is that compressed air is supplied at a more ideal temperature to downstream components. The result is improved operation of downstream components.

Although the above-description describes discharge air cooling jumper 400 having a shape and configuration such as shown in Figs. 3A, 3B, 3C, and 3D, it is conceivable that discharge air cooling jumper may have a shape and configuration involving any combination of a set of fittings and a pipe, tubing, metal couplings, and the like.

Although the above-description describes a BA-921® compressor being modified to provide additional cooling of discharge air from the compressor, it is conceivable that other commercially available vehicle air compressors may be modified to accomplish the same. It is also conceivable that commercially available vehicle air compressors may be modified or new vehicle air compressors be designed to comprise more than one discharge air cooling jumper.

Further, although the above-description describes apparatus 100 being used in a heavy vehicle such as a truck, it is conceivable that apparatus 100 may be used in other types of heavy vehicles, such as busses for example.

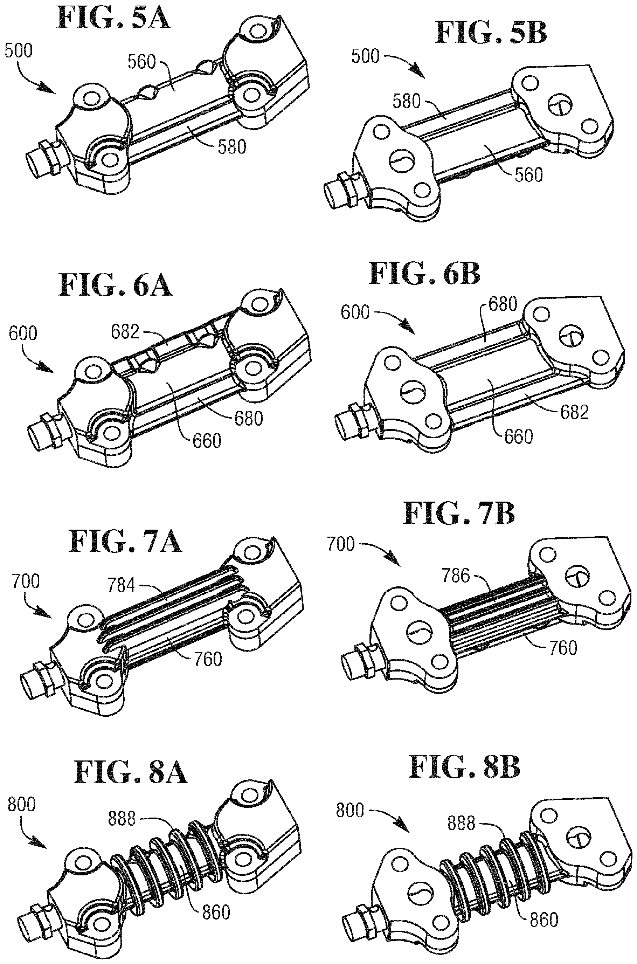

Another embodiment is illustrated in Figs. 5A and 5B. Discharge air cooling jumper 500 shown in Figs. 5A and 5B has similar construction as discharge air cooling jumper 400 shown in Figs. 4A and 4B. Jumper 500 further includes cooling fin or rib 580 disposed longitudinally on one side of central portion 560 of jumper 500. Cooling fin 580 provides more surface area exposed to ambient air to improve cooling effectiveness of jumper 500.

Another embodiment is illustrated in Fig. 6A and 6B. Discharge air cooling jumper 600 shown in Figs. 6A and 6B has similar construction as discharge air cooling jumper 400 shown in Figs. 4A and 4B. Jumper 600 further includes cooling fin or rib 680 disposed longitudinally on one side of central portion 660 of jumper 600 and another cooling fin 682 disposed longitudinally on opposite side of central portion 660 of jumper 600. Cooling fins 680, 682 provide more surface area exposed to ambient air to improve cooling effectiveness of jumper 600.

Another embodiment is illustrated in Figs. 7A and 7B. Discharge air cooling jumper 700 shown in Figs. 7A and 7B has similar construction as discharge air cooling jumper 400 shown in Figs. 4A and 4B. Jumper 700 further includes at least one cooling fin 784 disposed longitudinally on top side of central portion 760 of jumper 700. Jumper 700 also includes at least one cooling fin 786 disposed longitudinally on bottom side of central portion 760 of jumper 700. Cooling fins 784, 786 provide more surface area exposed to ambient air to improve cooling effectiveness of jumper 700.

It is conceivable that any number of cooling fins be disposed on top side of central portion 760, and that any number of cooling fins be disposed on bottom side of central portion 760. It is also conceivable that only cooling fins are disposed on top side without any cooling fins disposed on bottom side, or only cooling fins are disposed on bottom side without any cooling fins disposed on top side.

Another embodiment is illustrated in Figs. 8A and 8B. Discharge air cooling jumper 800 shown in Figs. 8A and 8B has similar construction as discharge air cooling jumper 400 shown in Figs. 4A and 4B. Jumper 800 further includes at least one cooling fin or rib 888 disposed radially on central portion 860 of jumper 800. Radial cooling fin 888 provides more surface area exposed to ambient air to improve cooling effectiveness of jumper 800.

It should be apparent that above-described cooling fins or ribs change the geometry of the jumper to improve cooling effectiveness of the jumper and thereby to provide extra cooling of compressed air traveling through the jumper. The number of cooling fins may be any combination of side fins, top fins, bottom fins, or radial fins.

While the present invention has been illustrated by the description of example processes and system components, and while the various processes and components have been described in detail, applicant does not intend to restrict or in any way limit the scope of the appended claims to such detail. Additional modifications will also readily appear to those skilled in the art. The invention in its broadest aspects is therefore not limited to the specific details, implementations, or illustrative examples shown and described.

## Claims

1. A vehicle air compressor apparatus (102) for a heavy vehicle air braking system, the vehicle air compressor apparatus comprising:
a compressor crankcase assembly (106);
a compressor cylinder head assembly (104) disposed on the crankcase assembly and including (i) an air inlet port (307) through which air can be received for compression within the crankcase and cylinder head assemblies, (ii) a discharge port (308) through which compressed air can be delivered from the cylinder head assembly, (iii) a first intermediate port (342) through which compressed air can pass, and (iv) a second intermediate port (352) through which cooled compressed air can pass; and
a discharge air cooling jumper (400, 500, 600, 700) connected externally of the cylinder head assembly between the first and second intermediate ports and arranged to cool compressed air passing from the first intermediate port through a discharge air path (462) of the jumper to the second intermediate port and thereby to provide cooler compressed air to be delivered from the cylinder head assembly through the discharge port;
wherein (i) the discharge air cooling jumper includes a first end portion (440) defining a first end of the discharge air path (462) and a second end portion (450) defining second end of the discharge air path, and (ii) the discharge air path extends in a substantial U-shape between the first and second ends of the discharge air path; and
wherein (i) the first end portion (440) of the jumper defines a first jumper bearing surface (444) which faces a first cylinder head bearing surface (344) in the vicinity of the first intermediate port (342) of the cylinder head assembly, and (ii) the second end portion (450) of the jumper defines a second jumper bearing surface (454) which faces a second cylinder head bearing surface (354) in the vicinity of the second intermediate port (352) of the cylinder head assembly (104).

2. A vehicle air compressor apparatus according to claim 1, wherein the discharge air cooling jumper includes at least one longitudinally-extending cooling fin (580, 680) disposed externally on a first side of the jumper.

3. A vehicle air compressor apparatus according to claim 2, wherein the discharge air cooling jumper includes at least one longitudinally-extending cooling fin (682) disposed externally on a second side of the jumper opposite the first side of the jumper.

4. A vehicle air compressor apparatus according to claim 1, wherein the discharge air cooling jumper includes at least one longitudinally-extending cooling fin (784) disposed externally on top of the jumper.

5. A vehicle air compressor apparatus according to claim 1, wherein the discharge air cooling jumper includes at least one longitudinally-extending cooling fin disposed externally on bottom of the jumper (786).

6. A vehicle air compressor apparatus according to claim 1, wherein the discharge air cooling jumper includes (i) at least one longitudinally-extending cooling fin (784) disposed externally on top side of the jumper, and (ii) at least one longitudinally-extending cooling fin (786) disposed externally on bottom of the jumper.

7. A vehicle air compressor apparatus according to claim 1, wherein the discharge air cooling jumper includes at least one radially-extending cooling fin (888) disposed externally around at least a portion of the jumper.

8. A vehicle air compressor apparatus according to claim 1, wherein the discharge air cooling jumper includes a safety valve (470) disposed at one of the first and second end portions (440, 450) of the jumper and connected in fluid communication with the discharge air path (462).

9. A vehicle air compressor apparatus according to claim 1, wherein the cylinder head assembly includes (i) a first O-ring (348) disposed between the first jumper bearing surface (444) and the first cylinder head bearing surface (344) in the vicinity of the first intermediate port (342) to provide an air-tight seal between the bearing surfaces, and (ii) a second O-ring (358) disposed between the second jumper bearing surface (454) and the second cylinder head bearing surface (354) in the vicinity of the second intermediate port (352) to provide an airtight seal between the bearing surfaces.

10. A vehicle air compressor apparatus according to claim 1, wherein (i) the first intermediate port (342) is connectable in fluid communication to the air inlet port (307) through a first number of air passages which are internal to the cylinder head, and (ii) the second intermediate port (352) is connectable in fluid communication to the discharge port (308) through a second number of air passages which are internal to the cylinder head assembly.

11. A vehicle air compressor apparatus (102) for a heavy vehicle braking system, the vehicle air compressor apparatus comprising:
a compressor cylinder head assembly (104) connectable to a crankcase assembly (106) and including (i) an air inlet port (307) through which air can be received for compression within the crankcase and cylinder head assemblies, (ii) a discharge port (308) through which compressed air can be delivered from the cylinder head assembly, (iii) a first intermediate port (342) through which compressed air can pass, and (iv) a second intermediate port (352) through which cooled compressed air can pass; and
a discharge air cooling jumper (400, 500, 600, 700) connected externally of the cylinder head assembly between the first and second intermediate ports and arranged to cool compressed air passing from the first intermediate port through a discharge air path (462) of the jumper to the second intermediate port and thereby to provide cooler compressed air to be delivered from the cylinder head assembly through the discharge port;
wherein (i) the discharge air cooling jumper includes a first end portion (440) defining a first end of the discharge air path (462) and a second end portion (450) defining second end of the discharge air path, and (ii) the discharge air path extends in a substantial U-shape between the first and second ends of the discharge air path;
wherein (i) the first end portion (440) of the jumper defines a first jumper bearing surface (444) which faces a first cylinder head bearing surface (344) in the vicinity of the first intermediate port (342) of the cylinder head assembly, and (ii) the second end portion (450) of the jumper defines a second jumper bearing surface (454) which faces a second cylinder head bearing surface (354) in the vicinity of the second intermediate port (352) of the cylinder head assembly (104).

12. A method of retrofitting a vehicle air compressor apparatus (102) of claim 1 to a vehicle air compressor having a legacy crankcase assembly (206) and a legacy cylinder head assembly (204) disposed on the legacy crankcase assembly (206), wherein the method comprises (i) removing the legacy cylinder head assembly (204) from the legacy crankcase assembly (206), (ii) connecting the compressor cylinder head assembly (104) to the legacy crankcase assembly (206), and (iii) connecting the discharge air cooling jumper (400, 500, 600, 700) to the compressor cylinder head assembly (104).

13. A vehicle air compressor apparatus according to claim 11, wherein the discharge air cooling jumper comprises at least one cooling fin (580, 680, 682, 784, 786, 888) disposed externally on the jumper.

14. A vehicle air compressor apparatus according to claim 13, wherein the discharge air cooling jumper includes a safety valve (470) connected in fluid communication with the substantially U-shaped discharge air path (462) within the jumper.

## Patentansprüche

1. Fahrzeugluftkompressorvorrichtung (102) für ein Druckluftbremssystem für Schwerfahrzeuge, wobei die Fahrzeugluftkompressorvorrichtung Folgendes umfasst:
eine Kompressorkurbelgehäuseanordnung (106);
eine Kompressorzylinderkopfanordnung (104), die auf der Kurbelgehäuseanordnung angeordnet ist und (i) einen Lufteinlassanschluss (307), durch den Luft zum Komprimieren innerhalb der Kurbelgehäuse- und Zylinderkopfanordnung aufgenommen werden kann, (ii) einen Auslassanschluss (308), durch den Druckluft von der Zylinderkopfanordnung geliefert werden kann, (iii) einen ersten Zwischenanschluss (342), durch den Druckluft strömen kann, und (iv) einen zweiten Zwischenanschluss (352), durch den gekühlte Druckluft strömen kann, aufweist; und
eine Abluftkühlungsbrücke (400, 500, 600, 700), die außerhalb der Zylinderkopfanordnung zwischen dem ersten und zweiten Zwischenanschluss verbunden ist und dazu ausgebildet ist, Druckluft, die vom ersten Zwischenanschluss durch eine Abluftbahn (462) der Brücke zum zweiten Zwischenanschluss strömt, zu kühlen und dadurch kühlere Druckluft bereitzustellen, die von der Zylinderkopfanordnung durch den Auslassanschluss geliefert wird;
wobei (i) die Abluftkühlungsbrücke einen ersten Endabschnitt (440), der ein erstes Ende der Abluftbahn (462) definiert, und einen zweiten Endabschnitt (450), der ein zweites Ende der Abluftbahn definiert, aufweist und (ii) sich die Abluftbahn im Wesentlichen U-förmig zwischen dem ersten und zweiten Ende der Abluftbahn erstreckt; und
wobei (i) der erste Endabschnitt (440) der Brücke eine erste Brückenlagerfläche (444) definiert, die in der Nähe des ersten Zwischenanschlusses (342) der Zylinderkopfanordnung einer ersten Zylinderkopflagerfläche (344) zugewandt ist, und (ii) der zweite Endabschnitt (450) der Brücke eine zweite Brückenlagerfläche (454) definiert, die in der Nähe des zweiten Zwischenanschlusses (352) der Zylinderkopfanordnung (104) einer zweiten Zylinderkopflagerfläche (354) zugewandt ist.

2. Fahrzeugluftkompressorvorrichtung nach Anspruch 1, wobei die Abluftkühlungsbrücke mindestens eine sich längs erstreckende Kühlrippe (580, 680) aufweist, die außen auf einer ersten Seite der Brücke angeordnet ist.

3. Fahrzeugluftkompressorvorrichtung nach Anspruch 2, wobei die Abluftkühlungsbrücke mindestens eine sich längs erstreckende Kühlrippe (682) aufweist, die außen auf einer zweiten Seite der Brücke, gegenüber der ersten Seite der Brücke, angeordnet ist.

4. Fahrzeugluftkompressorvorrichtung nach Anspruch 1, wobei die Abluftkühlungsbrücke mindestens eine sich längs erstreckende Kühlrippe (784) aufweist, die außen oben auf der Brücke angeordnet ist.

5. Fahrzeugluftkompressorvorrichtung nach Anspruch 1, wobei die Abluftkühlungsbrücke mindestens eine sich längs erstreckende Kühlrippe aufweist, die außen am Boden der Brücke (786) angeordnet ist.

6. Fahrzeugluftkompressorvorrichtung nach Anspruch 1, wobei die Abluftkühlungsbrücke (i) mindestens eine sich längs erstreckende Kühlrippe (784), die außen auf der Oberseite der Brücke angeordnet ist, und (ii) mindestens eine sich längs erstreckende Kühlrippe (786), die außen am Boden der Brücke angeordnet ist, aufweist.

7. Fahrzeugluftkompressorvorrichtung nach Anspruch 1, wobei die Abluftkühlungsbrücke mindestens eine sich radial erstreckende Kühlrippe (888) aufweist, die außen um zumindest einen Teil der Brücke angeordnet ist.

8. Fahrzeugluftkompressorvorrichtung nach Anspruch 1, wobei die Abluftkühlungsbrücke ein Sicherheitsventil (470) aufweist, das am ersten oder zweiten Endabschnitt (440, 450) der Brücke angeordnet ist und mit der Abluftbahn (462) in Fluidverbindung steht.

9. Fahrzeugluftkompressorvorrichtung nach Anspruch 1, wobei die Zylinderkopfanordnung (i) einen ersten O-Ring (348), der zwischen der ersten Brückenlagerfläche (444) und der ersten Zylinderkopflagerfläche (344) in der Nähe des ersten Zwischenanschlusses (342) angeordnet ist, um eine luftdichte Abdichtung zwischen den Lagerflächen bereitzustellen, und (ii) einen zweiten O-Ring (358), der zwischen der zweiten Brückenlagerfläche (454) und der zweiten Zylinderkopflagerfläche (354) in der Nähe des zweiten Zwischenanschlusses (352) angeordnet ist, um eine luftdichte Abdichtung zwischen den Lagerflächen bereitzustellen, aufweist.

10. Fahrzeugluftkompressorvorrichtung nach Anspruch 1, wobei (i) der erste Zwischenanschluss (342) durch eine erste Anzahl von Luftkanälen innerhalb des Zylinderkopfes mit dem Lufteinlassanschluss (307) in Fluidverbindung gebracht werden kann, und (ii) der zweite Zwischenanschluss (352) durch eine zweite Anzahl von Luftkanälen innerhalb der Zylinderkopfanordnung mit dem Auslassanschluss (308) in Fluidverbindung gebracht werden kann.

11. Fahrzeugluftkompressorvorrichtung (102) für ein Bremssystem für Schwerfahrzeuge, wobei die Fahrzeugluftkompressorvorrichtung Folgendes umfasst:
eine Kompressorzylinderkopfanordnung (104), die mit einer Kurbelgehäuseanordnung (106) verbunden werden kann und (i) einen Lufteinlassanschluss (307), durch den Luft zum Komprimieren innerhalb der Kurbelgehäuse- und Zylinderkopfanordnung aufgenommen werden kann, (ii) einen Auslassanschluss (308), durch den Druckluft von der Zylinderkopfanordnung geliefert werden kann, (iii) einen ersten Zwischenanschluss (342), durch den Druckluft strömen kann, und (iv) einen zweiten Zwischenanschluss (352), durch den gekühlte Druckluft strömen kann, aufweist; und
eine Abluftkühlungsbrücke (400, 500, 600, 700), die außerhalb der Zylinderkopfanordnung zwischen dem ersten und zweiten Zwischenanschluss verbunden ist und dazu ausgebildet ist, Druckluft, die vom ersten Zwischenanschluss durch eine Abluftbahn (462) der Brücke zum zweiten Zwischenanschluss strömt, zu kühlen und dadurch kühlere Druckluft bereitzustellen, die von der Zylinderkopfanordnung durch den Auslassanschluss geliefert wird;
wobei (i) die Abluftkühlungsbrücke einen ersten Endabschnitt (440), der ein erstes Ende der Abluftbahn (462) definiert, und einen zweiten Endabschnitt (450), der ein zweites Ende der Abluftbahn definiert, aufweist und (ii) sich die Abluftbahn im Wesentlichen U-förmig zwischen dem ersten und zweiten Ende der Abluftbahn erstreckt; und
wobei (i) der erste Endabschnitt (440) der Brücke eine erste Brückenlagerfläche (444) definiert, die in der Nähe des ersten Zwischenanschlusses (342) der Zylinderkopfanordnung einer ersten Zylinderkopflagerfläche (344) zugewandt ist, und (ii) der zweite Endabschnitt (450) der Brücke eine zweite Brückenlagerfläche (454) definiert, die in der Nähe des zweiten Zwischenanschlusses (352) der Zylinderkopfanordnung (104) einer zweiten Zylinderkopflagerfläche (354) zugewandt ist.

12. Verfahren zum Nachrüsten einer Fahrzeugluftkompressorvorrichtung (102) nach Anspruch 1 auf einen Fahrzeugluftkompressor, der eine bestehende Kurbelgehäuseanordnung (206) und eine bestehende Zylinderkopfanordnung (204), die auf der bestehenden Kurbelgehäuseanordnung (206) angeordnet ist, aufweist, wobei das Verfahren (i) das Entfernen der bestehenden Zylinderkopfanordnung (204) von der bestehenden Kurbelgehäuseanordnung (206), (ii) das Verbinden der Kompressorzylinderkopfanordnung (104) mit der bestehenden Kurbelgehäuseanordnung (206) und (iii) das Verbinden der Abluftkühlungsbrücke (400, 500, 600, 700) mit der Kompressorzylinderkopfanordnung (104) umfasst.

13. Fahrzeugluftkompressorvorrichtung nach Anspruch 11, wobei die Abluftkühlungsbrücke mindestens eine Kühlrippe (580, 680, 682, 784, 786, 888) umfasst, die außen auf der Brücke angeordnet ist.

14. Fahrzeugluftkompressorvorrichtung nach Anspruch 13, wobei die Abluftkühlungsbrücke ein Sicherheitsventil (470) aufweist, das mit der im Wesentlichen U-förmigen Abluftbahn (462) in der Brücke in Fluidverbindung steht.

## Revendications

1. Dispositif (102) de compresseur d'air de véhicule pour un système de freinage pneumatique d'un véhicule lourd, le dispositif de compresseur d'air de véhicule comprenant :
un ensemble (106) de carter de vilebrequin de compresseur ;
un ensemble (104) de tête de cylindre de compresseur, disposé sur l'ensemble de carter de vilebrequin et comprenant (i) un orifice (307) d'entrée d'air, par lequel de l'air peut être reçu pour une compression dans les ensembles de carter de vilebrequin et de tête de cylindre, (ii) un orifice (308) de refoulement, par lequel de l'air comprimé peut être fourni par l'ensemble de tête de cylindre, (iii) un premier orifice (342) intermédiaire, par lequel de l'air comprimé peut passer, et (iv) un deuxième orifice (352) intermédiaire, par lequel de l'air comprimé refroidi peut passer et
une jonction (400, 500, 600, 700) de refroidissement d'air de refoulement, reliée à l'extérieur de l'ensemble de tête de cylindre entre les premier et deuxième orifices intermédiaires et agencée pour faire passer de l'air comprimé froid du premier orifice intermédiaire au deuxième orifice intermédiaire, en suivant un trajet (462) d'air de refoulement de la jonction et en fournissant ainsi de l'air comprimé plus froid à envoyer de l'ensemble de tête de cylindre, par l'intermédiaire de l'orifice de refoulement
dans lequel (i) la jonction de refroidissement d'air de refoulement comprend un première partie (440) d'extrémité, définissant une première extrémité du trajet (462) d'air de refoulement, et une deuxième partie (450) d'extrémité, définissant une deuxième extrémité du trajet d'air de refoulement, et (ii) le trajet d'air de refoulement s'étend suivant une forme sensiblement en U entre les première et deuxième extrémités du trajet d'air de refoulement et
dans lequel (i) la première partie (440) d'extrémité de la jonction définit une première surface (444) de portée de jonction, qui fait face à une première surface (344) de portée de la tête de cylindre, au voisinage du premier orifice (342) intermédiaire de l'ensemble de tête de cylindre, et (ii) la deuxième partie (450) d'extrémité de la jonction définit une deuxième surface (454) de portée de jonction, qui fait face à une deuxième surface (354) de portée de la tête de cylindre, au voisinage du deuxième orifice (352) intermédiaire de l'ensemble (104) de tête de cylindre.

2. Dispositif de compresseur d'air de véhicule suivant la revendication 1, dans lequel la jonction de refroidissement d'air de refoulement comprend au moins une ailette (580, 680) de refroidissement s'étendant longitudinalement et disposée à l'extérieur d'un premier côté de la jonction.

3. Dispositif de compresseur d'air de véhicule suivant la revendication 2, dans lequel la jonction de refroidissement d'air de refoulement comprend au moins une ailette (682) de refroidissement s'étendant longitudinalement et disposée à l'extérieur d'un deuxième côté de la jonction opposé au premier côté de la jonction.

4. Dispositif de compresseur d'air de véhicule suivant la revendication 1, dans lequel la jonction d'air de refoulement comprend au moins une ailette (784) de refroidissement s'étendant longitudinalement et disposée à l'extérieur au sommet de la jonction.

5. Dispositif de compresseur d'air de véhicule suivant la revendication 1, dans lequel la jonction de refroidissement d'air de refoulement comprend au moins une ailette de refroidissement s'étendant longitudinalement et disposée à l'extérieur du fond de la jonction (786).

6. Dispositif de compresseur d'air de véhicule suivant la revendication 1, dans lequel la jonction de refroidissement d'air de refoulement comprend (i) au moins une ailette (784) de refroidissement s'étendant longitudinalement et disposée à l'extérieur du côté du sommet de la jonction, et (ii) au moins une ailette (786) de refroidissement s'étendant longitudinalement et disposée à l'extérieur du fond de la jonction.

7. Dispositif de compresseur d'air de véhicule suivant la revendication 1, dans lequel la jonction de refroidissement d'air de refoulement comprend au moins une ailette (888) de refroidissement s'étendant radialement et disposée à l'extérieur autour d'au moins une partie de la jonction.

8. Dispositif de compresseur d'air de véhicule suivant la revendication 1, dans lequel la jonction de refroidissement d'air de refoulement comprend une soupape (470) de sécurité, disposée à l'une de la première et de la deuxième parties (440, 450) d'extrémité de la jonction et en communication fluidique avec le trajet (462) d'air de refoulement.

9. Dispositif de compresseur d'air de véhicule suivant la revendication 1, dans lequel l'ensemble de tête de cylindre comprend (1) un premier joint (348) torique, monté entre la première surface (444) de portée de la jonction et la première surface (344) de portée de la tête de cylindre, au voisinage du premier orifice (342) intermédiaire, pour donner un joint étanche à l'air entre les surfaces de portée, et (ii) un deuxième joint (358) torique, monté en la deuxième surface (454) de portée de la jonction et la deuxième surface (354) de portée de la tête de cylindre, au voisinage du deuxième orifice (352) intermédiaire, pour donner un joint étanche à l'air entre les surfaces de portée.

10. Dispositif de compresseur d'air de véhicule suivant la revendication 1, dans lequel (i) le premier orifice (342) intermédiaire peut être mis en communication fluidique avec l'orifice (307) d'entrée, par un premier nombre de passages pour de l'air, qui sont à l'intérieur de la tête de cylindre, et (ii) le deuxième orifice (352) intermédiaire peut être mis en communication fluidique avec l'orifice (308) de refoulement, par un deuxième nombre de passages pour de l'air, qui sont à l'intérieur de l'ensemble de la tête de cylindre.

11. Dispositif (102) de compresseur d'air de véhicule pour un système de freinage pneumatique d'un véhicule lourd, le dispositif de compresseur d'air de véhicule comprenant :
un ensemble (106) de carter de vilebrequin de compresseur ;
un ensemble (104) de tête de cylindre de compresseur, disposé sur l'ensemble de carter de vilebrequin et comprenant (i) un orifice (307) d'entrée d'air, par lequel de l'air peut être reçu pour une compression dans les ensembles de carter de vilebrequin et de tête de cylindre, (ii) un orifice (308) de refoulement d'évacuation, par lequel de l'air comprimé peut être fourni par l'ensemble de tête de cylindre, (iii) un premier orifice (342) intermédiaire, par lequel de l'air comprimé peut passer, et (iv) un deuxième orifice (352) intermédiaire, par lequel de l'air comprimé refroidi peut passer et
une jonction (400, 500, 600, 700) de refroidissement d'air de refoulement, reliée à l'extérieur de l'ensemble de tête de cylindre entre les premier et deuxième orifices intermédiaires et agencée pour faire passer de l'air comprimé froid du premier orifice intermédiaire au deuxième orifice intermédiaire, en suivant un trajet (462) d'air de refoulement de la jonction et en fournissant ainsi de l'air comprimé plus froid à envoyer de l'ensemble de tête de cylindre, par l'intermédiaire de l'orifice de refoulement
dans lequel (i) la jonction de refroidissement d'air de refoulement comprend un première partie (440) d'extrémité, définissant une première extrémité du trajet (462) d'air de refoulement, et une deuxième partie (450) d'extrémité, définissant une deuxième extrémité du trajet d'air de refoulement, et (ii) le trajet d'air de refoulement s'étend suivant une forme sensiblement en U entre les première et deuxième extrémités du trajet d'air de refoulement et
dans lequel (i) la première partie (440) d'extrémité de la jonction définit une première surface (444) de portée de jonction, qui fait face à une première surface (344) de portée de la tête de cylindre, au voisinage du premier orifice (342) intermédiaire de l'ensemble de tête de cylindre, et (ii) la deuxième partie (450) d'extrémité de la jonction définit une deuxième surface (454) de portée de jonction, qui fait face à une deuxième surface (354) de portée de la tête de cylindre, au voisinage du deuxième orifice (352) intermédiaire de l'ensemble (104) de tête de cylindre.

12. Procédé pour rétroadapter un dispositif (102) de compresseur d'air de véhicule suivant la revendication 1 à un compresseur d'air de véhicule ayant un ensemble (206) de carter de vilebrequin hérité et un ensemble (204) de tête de cylindre hérité, disposés sur l'ensemble (206) de carter de vilebrequin hérité, le procédé comprenant (i) retirer l'ensemble (204) de tête de cylindre hérité de l'ensemble (206) de carter de vilebrequin hérité, (ii) relier l'ensemble (104) de tête de cylindre de compresseur à l'ensemble (206) de carter de vilebrequin hérité, et (iii) relier la jonction (400, 500, 600, 700) de refroidissement d'air de refoulement à l'ensemble (104) de tête de cylindre de compresseur.

13. Dispositif de compresseur d'air de véhicule suivant la revendication 11, dans lequel la jonction de refroidissement d'air de refoulement comprend au moins une ailette (580, 680, 682, 784, 786, 888) de refroidissement disposée à l'extérieur sur la jonction.

14. Dispositif de compresseur d'air de véhicule suivant la revendication 13, dans lequel la jonction de refroidissement d'air de refoulement comprend une soupape (470) de sécurité en communication fluidique avec le trajet (462) d'air de refoulement sensiblement en forme de U à l'intérieur de la jonction.
